# EUROPEAN PATENT APPLICATION

(11) **EP 4 428 961 A2**
(43) Date of publication of application: **11.09.2024**
(21) Application number: 24160472.7
(22) Date of filing: 29.02.2024
(51) Int. Cl.: H01M 8/04223, H01M 8/04089, H01M 8/04228, H01M 8/04303, H01M 8/0438, H01M 8/04746, H01M 8/04955, H01M 8/10

(54) **FUEL CELL SYSTEM**

(30) Priority: 10.03.2023 JP 2023037047
(71) Applicant: Yanmar Holdings Co., Ltd., Osaka-shi, Osaka (JP)
(72) Inventor: MARUYAMA, Takehiro, Osaka-shi (JP); MATSUI, Shinichiro, Osaka-shi (JP); HIRAIWA, Takuya, Osaka-shi (JP); SHINAGAWA, Manabu, Osaka-shi (JP); YUKIZANE, Fumiaki, Osaka-shi (JP); TERAGUCHI, Naoki, Osaka-shi (JP); KUBO, Takahiro, Osaka-shi (JP); MARUTANI, Yusuke, Osaka-shi (JP)
(74) Representative: Dennemeyer & Associates S.A.

(57) **Abstract**

[Problem] Even when the ambient temperature rises and the pressure in the fuel gas system rises while the operation of the fuel cell stack or the fuel cell module is stopped, the possibility that the pressure in the fuel gas system exceeds the design pressure of the fuel gas system is reduced.

[Solution] A fuel cell system includes: a fuel cell module having a fuel cell stack; a fuel gas system that supplies a fuel gas to the fuel cell stack; an upstream-side block valve and a downstream-side block valve that open and close the fuel gas system; a vent system that is provided to branch from the fuel gas system between the upstream-side block valve and the downstream-side block valve; and a bleed valve that opens and closes the vent system. When an operation of the fuel cell stack is to be stopped, pressure reduction control, in which the bleed valve is opened after the upstream-side block valve is closed, and then the downstream-side block valve is closed after a predetermined time has elapsed, is performed.

## Description

### TECHNICAL FIELD

The present invention relates to a fuel cell system.

### BACKGROUND ART

Conventionally, a fuel cell system provided with a valve device called DBB (double block and bleed) has been disclosed. For example, in the fuel cell system of Patent Document 1, when the operation of the fuel cell device is stopped, two shutoff valves (block valves) disposed in a fuel gas supply path are closed, and a space between the two shutoff valves is opened by opening a bleed valve, and thereby, the supply of the fuel gas to the fuel cell device is stopped.

### PRIOR ART DOCUMENT

### PATENT DOCUMENT

Patent Document 1: JP 2020-9544 A

### SUMMARY OF INVENTION

### TECHNICAL PROBLEM

When the two shutoff valves are simultaneously closed to stop the supply of the fuel gas, the fuel gas remains in a pipe between the shutoff valve on the downstream side and a fuel cell stack or a fuel cell module (a module including the fuel cell stack) included in the fuel cell device in the fuel gas supply path (fuel gas system) at a pressure that is a pressure during normal operation of the fuel cell stack or the fuel cell module. Therefore, for example, in a case where the difference between the supply pressure of the fuel gas and the design pressure of the pipe is small, when the ambient temperature rises while the operation of the fuel cell stack or the fuel cell module is stopped, the fuel gas in the pipe expands, and the pressure in the pipe may exceed the design pressure.

The present invention has been made to solve the above-described problem, and an object of the present invention is to provide a fuel cell system capable of reducing the possibility that the pressure in the fuel gas system exceeds the design pressure of the fuel gas system even when the ambient temperature rises and the pressure in the fuel gas system rises while the operation of the fuel cell stack or the fuel cell module is stopped.

### SOLUTION TO PROBLEM

A fuel cell system according to one aspect of the present invention includes a fuel cell module having a fuel cell stack; a fuel gas system for supplying fuel gas to the fuel cell stack; an upstream-side block valve and a downstream-side block valve that open and close the fuel gas system; a vent system that is provided to branch from the fuel gas system between the upstream-side block valve and the downstream-side block valve; and a bleed valve that opens and closes the vent system, in which when an operation of the fuel cell stack is to be stopped, pressure reduction control, in which the bleed valve is opened after the upstream-side block valve is closed, and then the downstream-side block valve is closed after a predetermined time has elapsed, is performed.

### ADVANTAGEOUS EFFECTS OF INVENTION

According to the above-described configuration, even when the ambient temperature rises and the pressure in the fuel gas system rises while the operation of the fuel cell stack or the fuel cell module is stopped, it is possible to reduce the possibility that the pressure in the fuel gas system exceeds the design pressure of the fuel gas system.

### BRIEF DESCRIPTION OF DRAWINGS

FIG. 1 is an explanation diagram illustrating a schematic configuration of a fuel cell system according to one embodiment of the present invention.
FIG. 2 is a flowchart illustrating a flow of an operation of pressure reduction control in the fuel cell system.
FIG. 3 is a graph schematically illustrating change in pressure in a fuel gas system with and without the pressure reduction control.
FIG. 4 is a flowchart illustrating a flow of an operation of another pressure reduction control.
FIG. 5 is a flowchart illustrating a flow of an operation of still another pressure reduction control.
FIG. 6 is a block diagram schematically illustrating another configuration of the fuel cell system.
FIG. 7 is a flowchart illustrating a flow of an operation of pressure reduction control in the fuel cell system provided with the configuration illustrated in FIG. 6.
FIG. 8 is a block diagram schematically illustrating still another configuration of the fuel cell system.
FIG. 9 is a block diagram schematically showing still another configuration of the fuel cell system.
FIG. 10 is a block diagram schematically showing still another configuration of the fuel cell system.
FIG. 11 is a block diagram schematically showing still another configuration of the fuel cell system.
FIG. 12 is a block diagram schematically showing still another configuration of the fuel cell system.
FIG. 13 is a block diagram schematically showing still another configuration of the fuel cell system.

### DESCRIPTION OF EMBODIMENTS

Embodiments of the present invention are described with reference to the drawings. In the drawings, the same or corresponding parts are denoted by the same reference characters, and a description thereof will not be repeated unless otherwise required.

### <1. Outline of Fuel Cell System>

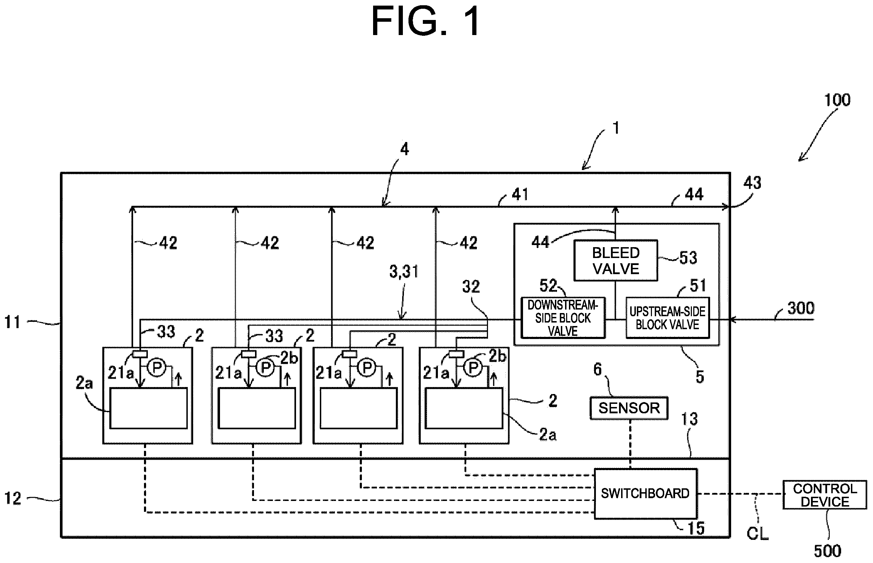

FIG. 1 is an explanation diagram illustrating a schematic configuration of a fuel cell system 100 according to one embodiment of the present invention. In FIG. 1, a solid arrow indicates a fluid passage (in particular, for example, a pipe) and a flow direction of a fluid flowing in the fluid passage. In FIG. 1, a broken line indicates wiring.

In the present embodiment, an example in which hydrogen is used as a fuel gas used in the fuel cell system 100 will be described. However, the configuration and control of the present embodiment can also be applied to a system in which a fuel gas other than hydrogen (for example, a gas containing methane as a main component) is used to generate electric power. In addition, the fuel cell system 100 described in the present embodiment is, although not particularly limited, suitable for use in, for example, a ship, and is also suitable for use on land (stationary use).

As shown in FIG. 1, the fuel cell system 100 includes a housing 1. Although the housing 1 has a rectangular parallelepiped shape as one example, the housing 1 may have another shape. The housing 1 includes a first section 11, a second section 12, and a partition wall 13.

The first section 11 and the second section 12 are arranged adjacent to each other. In the present embodiment, the first section 11 and the second section 12 are aligned vertically. The first section 11 is arranged above the second section 12. Note that the configuration in which the first section 11 and the second section 12 are aligned vertically is an example, and another configuration may be adopted. For example, the first section and the second section may be aligned side by side.

The partition wall 13 separates the first section 11 and the second section 12. The partition wall 13 constitutes a bottom wall of the first section 11. The partition wall 13 constitutes an upper wall of the second section 12. That is, the partition wall 13 is a wall commonly used by the first section 11 and the second section 12.

### (1-1. Internal Configuration of First Section)

As shown in FIG. 1, fuel cell modules 2 are disposed in the first section 11. In the present embodiment, four fuel cell modules 2 are accommodated in the first section 11. Note that only one fuel cell module 2 may be accommodated in the housing 1, or any number of (other than four) fuel cell modules 2 may be accommodated in the housing.

The fuel cell module 2 includes a fuel cell stack 2a. That is, the fuel cell system 100 of the present embodiment includes a fuel cell stack 2a. In addition, the fuel cell module 2 includes a boost converter, a compressor for blowing air, and a pump for circulating a cooling liquid (all of which are not shown). The fuel cell stack 2a is constituted by a plurality of stacked cells. Each cell includes a solid polymer electrolyte membrane, an anode electrode, a cathode electrode, and a pair of separators. The solid polymer electrolyte membrane is disposed between the anode electrode and the cathode electrode. The anode electrode is a negative electrode (fuel electrode). The anode electrode includes an anode catalyst layer and a gas diffusion layer. The cathode electrode is a positive electrode (air electrode). The cathode electrode includes a cathode catalyst layer and a gas diffusion layer. The anode electrode, the solid polymer electrolyte membrane, and the cathode electrode constitute a membrane electrode assembly (MEA). The membrane-electrode assembly is disposed between the pair of separators. Each separator has a plurality of grooves. Each groove of one of the pair of separators forms a flow path of a hydrogen gas. Each groove of the other of the pair of separators forms a flow path of an oxidant gas (for example, air).

On the anode electrode side, hydrogen is catalytically split into hydrogen ions and electrons. The hydrogen ions pass through the solid polymer electrolyte membrane and move to the cathode electrode side. On the other hand, the electrons

move to the cathode electrode side through an external circuit. As a result, current is generated (electric power is generated). On the cathode electrode side, oxygen contained in the oxidant gas combines with the electrons that have flowed through the external circuit and the hydrogen ions that have passed through the solid polymer electrolyte membrane to produce water. The produced water is discharged with an exhaust gas to the outside of the fuel cell system 100. The electric power generated by the fuel cell stack 2a is boosted by the boost converter and extracted to the outside of the fuel cell system 100.

The fuel cell module 2 has a hydrogen circulation pump 2b. The hydrogen circulation pump 2b is provided to return excess hydrogen that has not been used for electric power generation in the fuel cell stack 2a to the fuel cell stack 2a. Thus, the excess hydrogen may be reused in the fuel cell stack 2a.

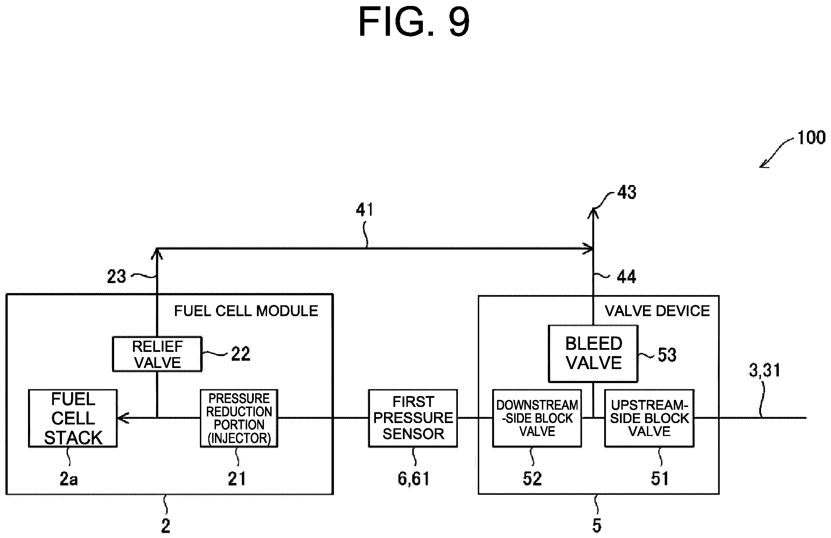

The fuel cell module 2 has an injector 21a. The injector 21a reduces the pressure of hydrogen (fuel gas) and supplies the hydrogen to the fuel cell stack 2a. The injector 21a is one example of a below-described pressure reduction portion 21 (see FIG. 9). The above-described injector 21a may be a pressure regulating valve having a shut-off function. Further, the fuel cell module 2 may not include the injector 21a. In this case, the operating pressure of the fuel cell stack 2a is the same as the operating pressure of a below-described individual pipe 33.

A fuel gas system 3 is disposed in the first section 11. That is, the fuel cell system 100 of the present embodiment includes the fuel gas system 3. The fuel gas system 3 supplies hydrogen (fuel gas) to the fuel cell stack 2a of the fuel cell module 2.

More specifically, the fuel gas system 3 includes a fuel gas supply pipe 31, a branch portion 32, and an individual pipe 33. The branch portion 32 connects the fuel gas supply pipe 31 and four individual pipes 33. Each of the four individual pipes 33 is connected to the fuel cell module 2. Hydrogen that has entered the fuel gas supply pipe 31 in the housing 1 from an external hydrogen supply passage 300 reaches the branch portion 32 via a below-described valve device 5, and is distributed to the four individual pipes 33 at the branch portion 32. Then, the hydrogen flowing through each individual pipe 33 is supplied to each fuel cell module 2.

A vent portion 4 is further disposed in the first section 11. The vent portion 4 includes a common vent passage 41 and an individual vent passage 42. The common vent passage 41 and the individual vent passages 42 can be constituted by pipes. Unnecessary hydrogen discharged from each fuel cell module 2 is sent to the common vent passage 41 via each individual vent passage 42. Then, the hydrogen is discharged from the atmosphere opening port 43 via a below-described vent system 44 connected to the common vent passage 41.

Although, in FIG. 1, the atmosphere opening port 43 is provided on a side surface of the housing 1, the atmosphere opening port 43 may be provided on another surface (for example, an upper surface) of the housing 1. In addition, another pipe (external vent passage) may be additionally connected to the atmosphere opening port 43, and hydrogen may be discharged to an appropriate place outside the housing 1 through this another pipe. Further, hydrogen flowing through each individual vent passage 42 may be directly discharged to the outside of the housing 1 (without passing through the common vent passage 41).

The vent portion 4 further includes a vent system 44. That is, the fuel cell system 100 of the present embodiment includes the vent system 44. The vent system 44 is a pipe that is branched from the fuel gas system 3 between an upstream-side block valve 51 and a downstream-side block valve 52 of a below-described valve device 5 and is connected to the atmosphere opening port 43. The above-described common vent passage 41 is connected to the vent system 44.

From the viewpoint of preventing the pressure in the hydrogen pipe between a hydrogen inlet of the housing 1 (a connection portion between the housing 1 and the external hydrogen supply passage 300) and the upstream-side block valve 51 from rising to the design pressure or higher, the upstream-side block valve 51 may be provided outside the housing 11.

A valve device 5 that is referred to as DBB is further disposed in the first section 11. The valve device 5 includes an upstream-side block valve 51, a downstream-side block valve 52, and a bleed valve 53. The upstream-side block valve 51 and the downstream-side block valve 52 are valves that are provided in the fuel gas system 3 (in particular, the fuel gas supply pipe 31) to open and close (open or block) the fuel gas system 3. The upstream-side block valve 51 and the downstream-side block valve 52 are arranged in this order from the upstream side in a direction in which hydrogen flows through the fuel gas supply pipe 31. Therefore, the downstream-side block valve 52 is positioned between the upstream-side block valve 51 and the fuel cell module 2. The bleed valve 53 is a valve that opens and closes the above-described vent system 44.

When the fuel cell module 2 is operated, hydrogen flowing through the fuel gas system 3 is supplied to the fuel cell module 2 by opening the upstream-side block valve 51 and the downstream-side block valve 52 and closing the bleed valve 53. Further, the supply of hydrogen to the fuel cell module 2 is stopped by closing the upstream-side block valve 51 and the downstream-side block valve 52. At this time, by opening the bleed valve 53, hydrogen accumulated in a space between the upstream-side block valve 51 and the downstream-side block valve 52 in the fuel gas system 3 (particularly, the fuel gas supply pipe 31) can be discharged to the outside of the housing 1 via the vent system 44.

As described above, the fuel cell system 100 according to the present embodiment includes the upstream-side block valve 51, the downstream-side block valve 52, the vent system 44, and the bleed valve 53.

Various sensors 6 are further disposed in the first section 11. The sensors 6 include a hydrogen sensor for detecting hydrogen concentration, a pressure sensor for detecting pressure in the pipe, and a temperature sensor for detecting temperature at a predetermined position, etc. These sensors 6 are arranged at appropriate positions in the first section 11.

### (1-2. Internal Configuration of Second Section)

An auxiliary machine related to the operation of the fuel cell module 2 is disposed in the second section 12. The above-described auxiliary machine includes a switchboard 15. The switchboard 15 is a portion through which wiring is taken out from the inside of the housing 1 to the outside and wiring is inserted from the outside to the inside. The switchboard 15 includes various terminals and relays. Further, the switchboard 15 includes a connection portion between wiring inside the housing 1 and wiring outside the housing 1.

Here, the wiring inside the housing 1 includes an electric power line through which electric power generated by the fuel cell module 2 flows, a control line for controlling the fuel cell module 2, and a sensor line connected to the various sensors 6. The wiring is disposed across the first section 11 and the second section 12 via a seal portion (not shown) provided in the partition wall 13. The switchboard 15 is connected to a control device 500 disposed outside the housing 1 via a communication line CL. For example, a wired line such as a cable can be used as the communication line CL. Note that the communication line CL may include a wireless network so that the housing 1 and the control device 500 can communicate with each other wirelessly.

The control device 500 is a device that controls operation of each portion in the housing 1. That is, the fuel cell system 100 of the present embodiment includes the control device 500. The control device 500 is constituted by, for example, a programmable logic controller (PLC). By sending a control signal from the control device 500 to the switchboard 15 of the housing 1 via the communication line CL, each portion in the housing 1 can be controlled. The control device 500 may be disposed in the housing 1 (for example, in the switchboard 15) and may be remotely controlled from the outside to control each portion of the housing 1.

In addition, an air intake portion, a heat exchanger, etc. are also disposed in the second section 12. The air intake portion takes in air to be supplied to the air electrode of the fuel cell stack 2a. The heat exchanger is provided to cool the fuel cell module 2 by using a coolant. The air intake portion and the heat exchanger are provided correspondingly to each fuel cell module 2. A flow path of air flowing from the air intake portion toward the fuel cell module 2 and a flow path of the coolant circulating between the heat exchanger and the fuel cell module are disposed across the first section 11 and the second section 12 via a seal portion (not shown) provided in the partition wall 13.

### <2. Pressure Reduction Control>

In this embodiment, when the operation of the fuel cell stack 2a is stopped due to a case in which, for example, the value detected by the sensor 6 is a value indicating abnormality, the pressure in the fuel gas system 3 is reduced by controlling opening and closing timings of each valve (the upstream-side block valve 51, the downstream-side block valve 52, and the bleed valve 53) of the valve device 5 as follows. The control device 500 conducts the pressure reduction control. That is, the opening and closing of each valve of the valve device 5 are controlled based on the control signal sent from the control device 500. The pressure reduction control of the present embodiment will be described below. The operation stop of the fuel cell stack 2a can also be considered as a stop of an operation of the fuel cell module 2, that is, a stop of an electric power generation by the fuel cell module 2.

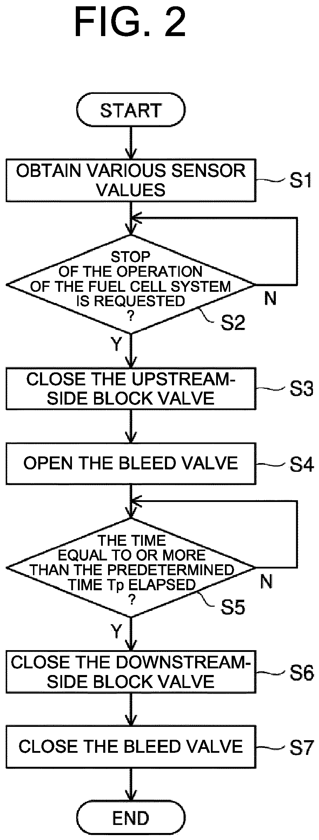

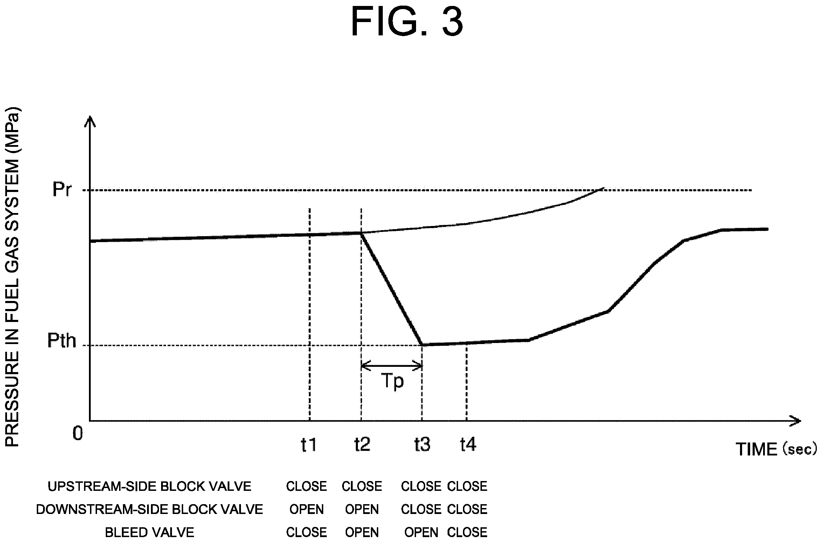

FIG. 2 is a flowchart illustrating a flow of an operation of pressure reduction control in the embodiment. FIG. 3 is a graph schematically illustrating changes in the pressure in a fuel gas system 3 (in this case, in a pipe on a downstream-side of the downstream-side block valve 52) with and without the pressure reduction control. In FIG. 3, a thick line graph indicates a pressure change when the pressure reduction control of the present embodiment is performed, and a thin line graph indicates a pressure change when the above-described pressure reduction control is not performed.

During the operation of the fuel cell module 2 (fuel cell stack 2a), the various sensors 6 constantly or periodically detect the hydrogen concentration and the like in the first section 11. A detection signal from the sensor 6 is output to the control device 500 via the switchboard 15 (S 1). In order to supply hydrogen to the fuel cell stack 2a during operation of the fuel cell stack 2a, the upstream-side block valve 51 and the downstream-side block valve 52 of the valve device 5 are opened and the bleed valve 53 is closed.

When there is a request to stop the fuel cell system 100 (Yes in S2), the control device 500 sends a control signal to the housing 1 to close the upstream-side block valve 51 of the valve device 5 (S3). Here, the time at which the upstream-side block valve 51 is closed is referred to as t1. Note that the case where there is a request to stop the fuel cell system 100 refers to a case where there is a normal stop operation for stopping electric power generation in the fuel cell system 100 on the control device 500 side, and a case where a value detected in the sensor 6 is a value indicating an abnormality and the control device 500 determines that it is necessary to stop the fuel cell system 100.

Next, the control device 500 sends a control signal to the housing 1 to open the bleed valve 53 of the valve device 5 (S4). Here, the time at which the bleed valve 53 is opened is referred to as t2. When the bleed valve 53 is opened, hydrogen remaining in the pipe on the downstream side of the upstream-side block valve 51 in the fuel gas system 3 flows through the vent system 44 and is discharged to the outside of the housing 1 via the atmosphere opening port 43. Therefore, as shown in FIG. 3, the pressure in the pipe of the fuel gas system 3 (particularly, the pressure on the downstream side of the upstream-side block valves 51) decreases with time after the time t2.

The control device 500 waits until the predetermined time Tp elapses from the time t2 (No in S5), and when the predetermined time Tp elapses from the time t2 (Yes in S5), the control device 500 sends a control signal to the housing 1 to close the downstream-side block valves 52 of the valve device 5 (S6). Here, the time at which the downstream-side block valve 52 is closed is referred to as t3. Thereafter, the control device 500 sends a control signal to the housing 1 to close the bleed valve 53 (S7). The time at which the bleed valve 53 is closed is referred to as t4.

Thus, a series of the pressure reduction control is completed.

As described above, in the present embodiment, when the operation of the fuel cell stack 2a is stopped, the control device 500 performs the below-described pressure reduction control. That is, the bleed valve 53 is opened (S3 and S4) after the upstream-side block valves 51 is closed, and the downstream-side block valve 52 is closed (S5 and S6) after the predetermined time Tp elapses from the opening of the bleed valve 53.

When the bleed valve 53 is opened in S4 after the upstream-side block valve 51 is closed in S3 and before the downstream-side block valve 52 is closed in the S6, the fuel gas (hydrogen) remaining in the pipe of the fuel gas system 3 on the downstream side of the upstream-side block valve 51 can be discharged from the bleed valve 53 to the atmosphere first. As a result, when the downstream-side block valve 52 is subsequently closed in S6, the pressure in the pipe of the fuel gas system 3 between the downstream-side block valve 52 and the fuel cell stack 2a can be made sufficiently lower than the design pressures Pr of the fuel gas system 3. Therefore, when the fuel gas remaining in the fuel gas system 3 expands due to an increase in the ambient temperature while the operation of the fuel cell stack 2a is stopped (i.e., while the operation of the fuel cell module 2 is stopped), and thereby, the pressure in the fuel gas system 3 increases, the possibility that the pressure in the fuel gas system 3 exceeds the design pressure Pr can be reduced. As a result, safety can be improved.

For example, it is assumed that the design pressure Pr of the pipe of the fuel gas system 3 is 0.99 MPaG, and the supply pressure is 0.90 MPaG (10 °C) on the assumption that the fuel gas remains in the pipe at the supply pressure. The above-mentioned "G" represents a gauge pressure based on the atmospheric air pressure (0.101325 MPa as an absolute value) (the same applies hereinafter). In this state, when the operation of the fuel cell stack 2a is stopped and the temperature of the fuel gas (for example, hydrogen) rises to 40 °C, the pressure in the pipe becomes 1.006 MPaG and exceeds the above-described design pressure Pr (see the thin line graph in FIG. 3). On the other hand, in the pressure reduction control of the present embodiment, the downstream-side block valve 52 is closed after the pressure in the pipe of the fuel gas system 3 between the downstream-side block valve 52 and the fuel cell stack 2a is made sufficiently smaller than the design pressure Pr of the fuel gas system 3. Thus, when the ambient temperature rises while the operation of the fuel cell stack 2a is stopped thereafter, the possibility that the pressure in the fuel gas system 3 exceeds the design pressure Pr is reduced (see the thick line graph in FIG. 3).

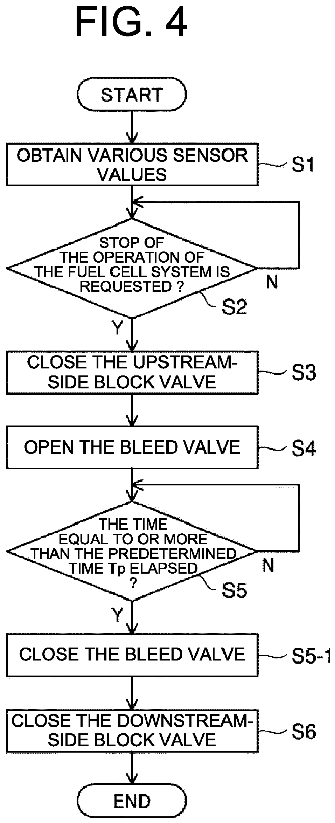

FIG. 4 is a flowchart illustrating a flow of an operation of another pressure reduction control of the embodiment. The pressure reduction control in FIG. 4 is the same as the pressure reduction control in FIG. 2 except that the bleed valve 53 is closed first in S5-1 after S5, and then the downstream-side block valve 52 is closed in S6.

When the bleed valve 53 is kept open after the S4, air (gas other than fuel gas) outside the housing 1 enters the fuel gas system 3 on the downstream side of the downstream-side block valve 52 via the atmosphere opening port 43 and the vent system 44. The reason why the bleed valve 53 is opened in S4 is to release the pressure in the pipe of the fuel gas system 3 on the downstream side of the downstream-side block valve 52. Since this object is achieved by the elapse of the predetermined time Tp from the opening of the bleed valve 53, it is desirable to close the bleed valve 53 early after S5 to reduce the amount of air entering the fuel gas system 3. From this viewpoint, as shown in FIG. 4, in the above-described pressure reduction control, the bleed valve 53 may be closed before the downstream-side block valve 52 is closed (see S5-1 and S6).

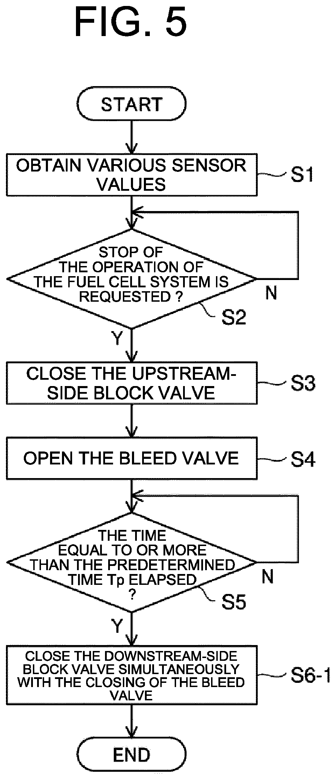

FIG. 5 is a flowchart illustrating a flow of an operation of still another pressure reduction control of the embodiment. The pressure reduction control in FIG. 5 is the same as the pressure reduction control in FIG. 2 except that, in S6-1 after S5, the downstream-side block valve 52 is closed simultaneously with the closing of the bleed valve 53.

From the same viewpoint as described above, that is, from the viewpoint of reducing the amount of air entering the fuel gas system 3, as shown in FIG. 5, in the above-described pressure reduction control, the bleed valve 53 may be closed simultaneously with the closing of the downstream-side block valve 52 (see S6-1).

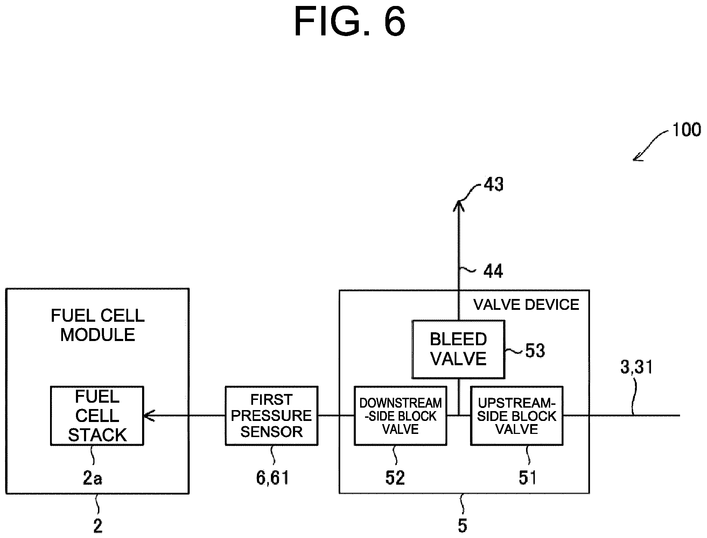

FIG. 6 is a block diagram schematically illustrating another configuration of the fuel cell system 100 of the present embodiment. As shown in FIG. 6, the fuel cell system 100 may include a first pressure sensor 61 as the sensor 6. The first pressure sensor 61 is disposed in the fuel gas system 3 between the upstream-side block valve 51 and the fuel cell stack 2a.

When the first pressure sensor 61 is disposed in this way, the predetermined time Tp in S5 in FIG. 2 may be a time until the measurement value of the first pressure sensor 61 becomes equal to or less than a preset setting value Pth.

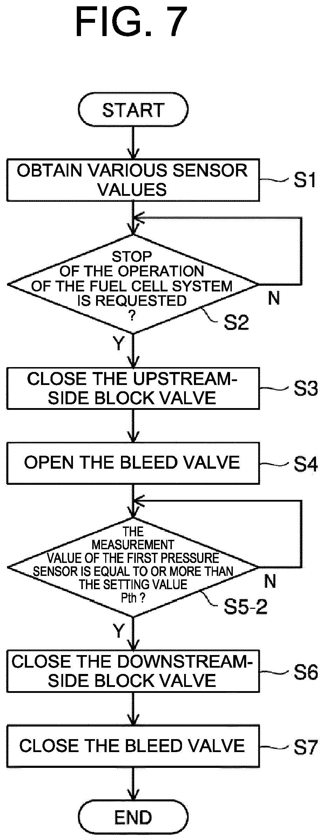

FIG. 7 is a flowchart illustrating a flow of an operation of pressure reduction control in the fuel cell system 100 provided with the configuration illustrated in FIG. 6. The pressure reduction control in FIG. 7 is the same as the pressure reduction control in FIG. 2 except that S5 is replaced by S5-2. When the measurement value of the first pressure sensor 61 becomes equal to or less than the setting value Pth in S5-2, the control device 500 sends a control signal to the housing 1 to close the downstream-side block valve 52 (S6).

When the predetermined time Tp is set as described above and the measurement value of the first pressure sensor 61 becomes equal to or less than the setting value Pth after S4, the predetermined time Tp has elapsed from the opening of the bleed valve 53 in S4. Therefore, by closing the downstream-side block valves 52 in S6 after S5-2, it is possible to reduce the possibility that, similarly to the pressure reduction control in FIG. 2, the pressure in the fuel gas system 3 exceeds the design pressure Pr of the fuel gas system 3 due to an increase in the ambient temperature.

Since the pressure can be directly monitored, it is desirable that the pressure in the fuel gas system 3 between the downstream-side block valve 52 and the fuel cell stack 2a is directly measured. In this respect, as shown in FIG. 6, it is desirable that the first pressure sensor 61 is disposed between the downstream-side block valve 52 and the fuel cell stack 2a in the fuel gas system 3.

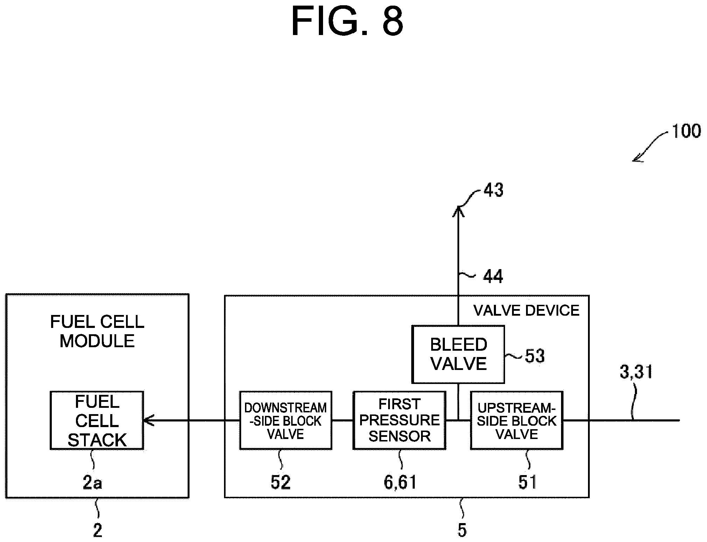

FIG. 8 is a block diagram schematically illustrating still another configuration of the fuel cell system 100 of the present embodiment. As shown in FIG. 8, the above-described first pressure sensor 61 may be disposed on the downstream side of the upstream-side block valve 51 and on the upstream side of the downstream-side block valve 52 in the fuel gas system 3.

When the first pressure sensor 61 is disposed as described above, the pressure in the closed space surrounded by the upstream-side block valve 51, the downstream-side block valve 52, and the bleed valve 53 in the fuel gas system 3 and the vent system 44 can be detected by the first pressure sensor 61 after all of the upstream-side block valve 51, the downstream-side block valve 52, and the bleed valve 53 are closed. For example, when the pressure in the above-described closed space decreases with the elapse of time, it is found that there is a possibility that the fuel gas leaks from any one of the valves or a joint between the valve and the pipe. As described above, the first pressure sensor 61 may be disposed between the upstream-side block valve 51 and the downstream-side block valve 52 in the fuel gas system 3 in that a leak check for detecting the presence or absence of leakage of the fuel gas can be performed by monitoring a change in the pressure in the shielded space.

FIG. 9 is a block diagram schematically illustrating still another configuration of the fuel cell system 100 of the present embodiment. As shown in FIG. 9, the fuel cell module 2 includes a pressure reduction portion 21 and a relief valve 22 in addition to the fuel cell stack 2a. The other configuration of FIG. 9 is the same as that of FIG. 6.

The pressure reduction portion 21 is disposed between the downstream-side block valve 52 and the fuel cell stack 2a in the fuel gas system 3. The pressure reduction portion 21 is constituted by an injector that decompresses and injects hydrogen that has passed through the downstream-side block valve 52. For example, the pressure reduction portion 21 reduces the pressure of hydrogen having a supply pressure of 0.9 MPaG that has passed through the downstream-side block valve 52 to 0.2 MpaG and supplies it to the fuel cell stack 2a.

The relief valve 22 is disposed in a discharge flow path portion 23 branching from the fuel gas system 3 between the pressure reduction portion 21 and the fuel cell stack 2a. The discharge flow path portion 23 merges with the vent system 44 via the common vent passage 41 on the downstream side opposite to the relief valve 22. The discharge flow path portion 23 may be the same pipe as the individual vent passage 42 shown in FIG. 1. As described above, the fuel cell system 100 of FIG. 9 includes the pressure reduction portion 21 and the relief valve 22.

For example, it is assumed that the pressure resistance of the fuel cell stack 2a is 0.6 MpaG. In this case, when the supply pressure of hydrogen supplied from the pressure reduction portion 21 to the fuel cell stack 2a becomes 0.4 to 0.5 MpaG, the relief valves 22 are opened to open the discharge flow path portion 23. In this case, the hydrogen passing through the pressure reduction portion 21 flows through the discharge flow path portion 23 and the common vent passage 41, joins the vent system 44, and is discharged from the atmosphere opening port 43 to the outside of the housing 1. Therefore, the relief valve 22 is configured to open in order to protect the fuel cell stack 2a when the pressure reduction portion 21 does not appropriately reduce the supply pressure of hydrogen, for example, when the pressure reduction portion 21 fails for some reason. The above-described relief valve 22 is configured of, for example, a mechanical valve.

In order to make the discharge route of the fuel gas (hydrogen) discharged from the relief valve 22 small, a configuration in which the fuel gas that flows when the relief valve 22 is opened is discharged to the outside by using the above-described vent system 44 is desirable. It is desirable that, as shown in FIG. 8, the discharge flow path portion 23 in which the relief valve 22 is disposed merges with the vent system 44 in that a part of the vent system 44 is commonly used as the discharge path of the fuel gas discharged from the relief valve 22, and thus, the configuration can be made small.

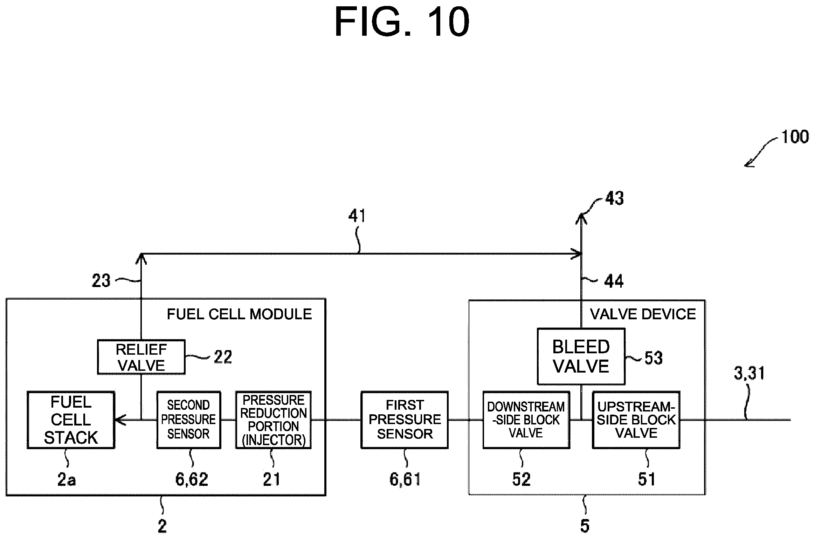

FIG. 10 is a block diagram schematically illustrating still another configuration of the fuel cell system 100 of the present embodiment. As shown in FIG. 10, the fuel cell module 2 further includes a second pressure sensor 62 in addition to the configuration of FIG. 9. That is, the fuel cell system 100 of FIG. 10 includes the second pressure sensor 62. The second pressure sensor 62 is disposed between the pressure reduction portion 21 and the fuel cell stack 2a in the fuel gas system 3.

In the pressure reduction control by the control device 500 of the present embodiment, when the value of the second pressure sensor 62 becomes equal to or greater than a predetermined value (for example, 0.3 MpaG), closing of the upstream-side block valve 51 may be closed and the downstream-side block valve 52 and the bleed valves 53 may be opened. The reason is as follows.

When the value of the second pressure sensor 62 is equal to or greater than the predetermined value, it can be determined that the pressure reduction portion 21 does not conduct pressure reduction of the supply pressure to a predetermined pressure (for example, 0.2 MpaG), and in this case, it can be determined that some abnormality (for example, failure) has occurred in the pressure reduction portion 21. In this case, the supply of the fuel gas to the fuel cell stack 2a is stopped by closing the upstream-side block valve 51, and thereby, it is possible to avoid a situation in which the fuel cell stack 2a is excessively boosted. Further, since the pressure in the fuel gas system 3 is reduced by opening the downstream-side block valve 52 and the bleed valve 53, the relief valve 22 can be made not to operate (not to open). When the relief valve 22 operates, the life of the relief valve 22 may be shortened in accordance with the number of times of operation. Further, when the mechanical relief valve 22 is operated, it takes time until the relief valve 22 is closed next time, and there is also a concern that the restoration is delayed. That is, when some abnormality occurs in the pressure reduction portion 21, by making the relief valve 22 not operate, it is possible to avoid a decrease in the operation life of the relief valve 22, and it is also possible to restore the relief valve 22 in a short time. From such a viewpoint, it is desirable to control the opening and closing of the upstream-side block valve 51, the downstream-side block valve 52, and the bleed valve 53 based on the value of the second pressure sensor 62 as described above.

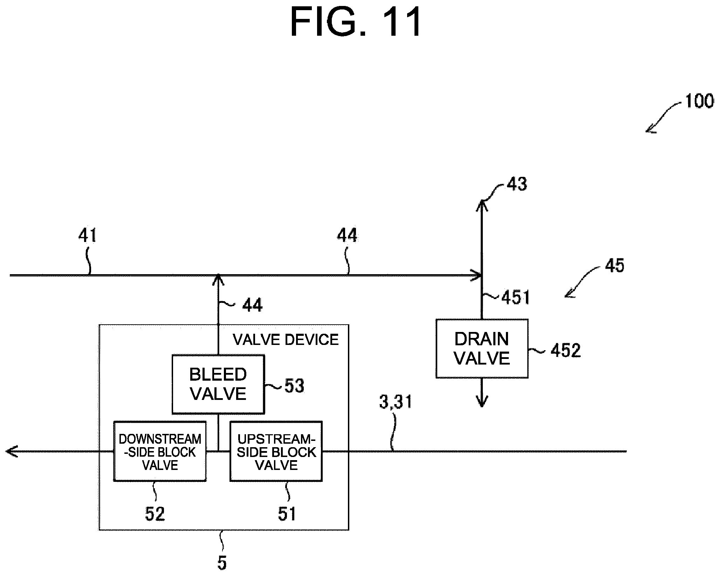

FIG. 11 is a block diagram schematically illustrating still another configuration of the fuel cell system 100 of the present embodiment. The fuel cell system 100 shown in FIG. 11 further includes a drain portion 45. The drain portion 45 communicates with the vent system 44 between the bleed valve 53 and the atmosphere opening port 43. The above-described drain portion 45 includes a drain pipe 451 connected to the vent system 44 and a drain valve 452 that opens and closes the drain pipe 451. The control of opening and closing of the drain valve 452 is performed based on a control signal from the control device 500.

By providing the drain portion 45, when moisture is condensed to cause dew condensation in the vent system 44 due to, for example, a decrease in ambient temperature, the condensed water (dew condensation water) can be discharged from the drain portion 45. For example, when the drain valve 452 is opened, the condensed water can be discharged to a predetermined place via the drain pipe 451. Therefore, the condensed water is prevented from flowing into the bleed valve 53 side. From the viewpoint of preventing such backflow of the condensed water to the vent system 44, it is desirable to provide the drain portion 45 communicating with the vent system 44.

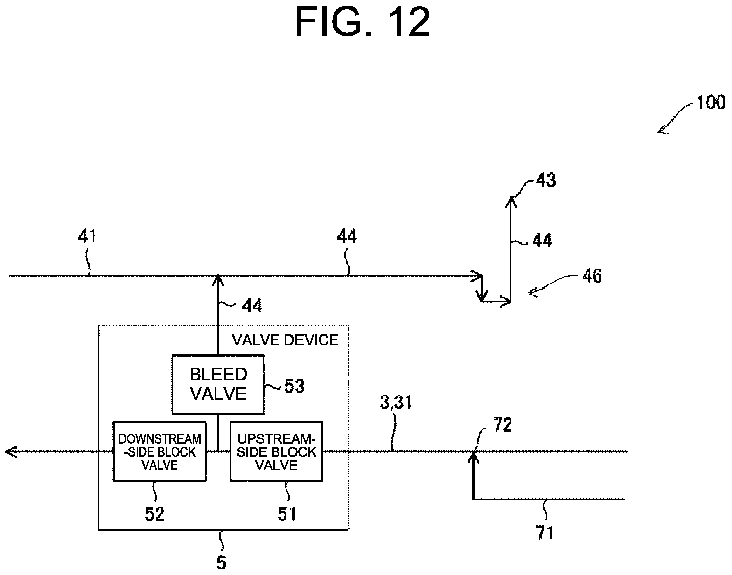

FIG. 12 is a block diagram schematically illustrating still another configuration of the fuel cell system 100 of the present embodiment. As shown in FIG. 12, the vent system 44 includes a condensed water backflow preventing portion 46. The condensed water backflow preventing portion 46 is formed by bending a part of the vent system 44 into a shape recessed downward.

The fuel cell system 100 further includes an inert gas supply passage 71. The inert gas supply passage 71 is connected to the fuel gas system 3 on the upstream side of the upstream-side block valve 51. Nitrogen as an inert gas is supplied to the inert gas supply passage 71. Note that the inert gas is not limited to the above-mentioned nitrogen, and may be argon or the like. A switching valve (not shown) is disposed in a merging portion 72 that is a connection portion between the inert gas supply passage 71 and the fuel gas system 3. By appropriately controlling the opening and closing of the switching valve based on the control signal from the control device 500 (see FIG. 1), it is possible to switch between the introduction of the inert gas from the inert gas supply passage 71 to the fuel gas system 3 and the stop of the introduction. A check valve (not shown) is also disposed in the inert gas supply passage 71.

In the configuration of FIG. 12, the drying control may be performed after the above-described pressure reduction control in a state in which the operation of the fuel cell stack 2a is stopped based on the control signal from the control device 500. In the drying control, the inert gas supplied from the inert gas supply passage 71 is guided to the condensed water backflow preventing portion 46.

When moisture is condensed in the vent system 44 to cause dew condensation, the condensed water can be prevented from flowing into the bleed valve 53 side by guiding the inert gas to the condensed water backflow preventing portion 46 to cause the condensed water to stay in the condensed water backflow preventing portion 46. Further, the condensed water staying in the condensed water backflow preventing portion 46 is dried and evaporated by applying an inert gas, and can be discharged from the atmosphere opening port 43. Therefore, as shown in FIG. 11, it is desirable that the control device 500 performs the above-described drying control in that the condensed water can be vaporized and easily discharged without providing the drain portion 45 and the discharge route of the condensed water.

In particular, in the above-described drying control, after the depressurization control (for example, after the bleed valve 53 is closed in S7 in FIG. 2), by controlling the valve device 5 as follows, the inert gas supplied from the inert gas supply passage 71 can be guided to the vent system 44 and the condensed water backflow preventing portion 46, and can be reliably applied to the condensed water. That is, in the above-described drying control, the inert gas is supplied from the inert gas supply passage 71 in a state in which the upstream-side block valve 51 and the bleed valve 53 are opened and the downstream-side block valve 52 is closed.

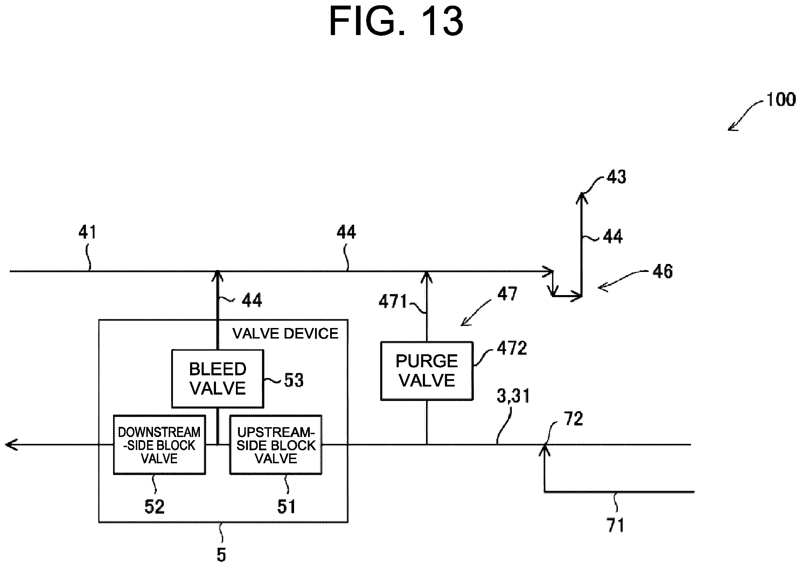

FIG. 13 is a block diagram schematically illustrating still another configuration of the fuel cell system 100 of the present embodiment. The fuel cell system 100 shown in FIG. 13 further includes a purge system 47 in addition to the configuration of FIG. 12. The purge system 47 branches off from the fuel gas system 3 at a position on the downstream side of the merging portion 72 between the fuel gas system 3 and the inert gas supply passage 71 and on the upstream side of the upstream-side block valve 51, and joins the vent system 44. The above-described purge system 47 includes a purge passage 471 and a purge valve 472. The purge passage 471 connects the fuel gas system 3 and the vent system 44. The purge valve 472 opens and closes the purge passage 471. The control of opening and closing of the purge valve 472 is performed based on the control signal from the control device 500.

For example, by opening the purge valve 472 while the upstream-side block valve 51 is closed, the inert gas supplied from the inert gas supply passage 71 can be guided to the vent system 44 via the purge passage 471. According to the above, when the upstream-side block valve 51 is closed, the condensed water staying in the condensed water backflow preventing portion 46 is dried and evaporated by applying an inert gas, and can be discharged from the atmosphere opening port 43.

At this time, since the upstream-side block valve 51 is closed, the inert gas does not enter the downstream side of the upstream-side block valve 51 in the fuel gas system 3. In a case in which the inert gas has entered the downstream side of the upstream-side block valves 51, it is necessary to push out the inert gas when the purge is performed with the fuel gas (for example, when the electric power generation is restarted in the fuel cell stack 2a), and the amount of the fuel gas used for the purge increases accordingly. In the above-described configuration, since the inert gas does not enter the pipe of the fuel gas system 3 on the downstream side of the upstream-side block valve 51, the amount of the fuel gas used for the purge can be reduced, and ultimately, the purge of the fuel gas into the pipe can be made unnecessary.

As described above, it is desirable to provide the above-described purge system 47 through which the inert gas flows since the amount of the fuel gas to be purged can be reduced.

In particular, in the above-described drying control, after the pressure reduction control (for example, after the bleed valve 53 is closed in S7 of FIG. 2), by controlling the valve device 5 and the purge valve 472 as follows, it is possible to reliably reduce the entry of the inert gas to the downstream side of the upstream-side block valves 51. That is, in the above-described drying control, after the purge valve 472 is opened in a state in which all of the upstream-side block valve 51, the downstream-side block valve 52, and the bleed valve 53 are closed, the inert gas is supplied from the inert gas supply passage 71.

### <3. Others>

The configurations and controls illustrated in the drawings can be combined as appropriate. For example, the timing of closing the bleed valve 53 and the downstream-side block valve 52 shown in FIGS. 4 and 5 can be applied to all the pressure reduction controls. Further, the configurations shown in FIGS. 11 to 13 can be applied to any of FIGS. 6 and 8 to 10.

### <4. Appendices>

The fuel cell system described in the present embodiment can also be expressed as a fuel cell system described in the following appendices.

A fuel cell system of appendix (1) includes: a fuel cell module having a fuel cell stack; a fuel gas system that supplies a fuel gas to the fuel cell stack; an upstream-side block valve and a downstream-side block valve that open and close the fuel gas system; a vent system that is provided to branch from the fuel gas system between the upstream-side block valve and the downstream-side block valve; and a bleed valve that opens and closes the vent system, wherein when an operation of the fuel cell stack is to be stopped, pressure reduction control, in which the bleed valve is opened after the upstream-side block valve is closed, and then the downstream-side block valve is closed after a predetermined time has elapsed, is performed.

A fuel cell system of appendix (2) is the fuel cell system according to appendix (1), wherein, in the pressure reduction control, the bleed valve is closed before the downstream-side block valve is closed.

A fuel cell system of appendix (3) is the fuel cell system according to appendix (1), wherein, in the pressure reduction control, the bleed valve is closed simultaneously with closing of the downstream-side block valve.

A fuel cell system of appendix (4) is the fuel cell system according to any one of appendices (1) to (3), further comprising a first pressure sensor disposed in the fuel gas system between the upstream-side block valve and the fuel cell stack, wherein the predetermined time is a time until a measurement value of the first pressure sensor becomes equal to or less than a preset setting value.

A fuel cell system of appendix (5) is the fuel cell system according to appendix (4), wherein the first pressure sensor is disposed between the downstream-side block valve and the fuel cell stack in the fuel gas system.

A fuel cell system of appendix (6) is the fuel cell system according to appendix (4), wherein the first pressure sensor is disposed between the upstream-side block valve and the downstream-side block valve in the fuel gas system.

A fuel cell system of appendix (7) is the fuel cell system according to appendices (1) to (6), further comprising: a pressure reduction portion disposed between the downstream-side block valve and the fuel cell stack in the fuel gas system; and a relief valve disposed in a discharge flow path portion that branches from the fuel gas system between the pressure reduction portion and the fuel cell stack, wherein the discharge flow path portion merges with the vent system on a downstream side opposite to the relief valve.

A fuel cell system of appendix (8) is the fuel cell system according to appendix (7), further comprising: a second pressure sensor disposed between the pressure reduction portion and the fuel cell stack in the fuel gas system, wherein, in the pressure reduction control, the upstream-side block valve is closed and the downstream-side block valve and the bleed valve are opened when a value of the second pressure sensor becomes equal to or greater than a predetermined value.

A fuel cell system of appendix (9) is the fuel cell system according to any one of appendices (1) to (8), further comprising a drain portion that communicates with the vent system between the bleed valve and the atmosphere opening port.

A fuel cell system of appendix (10) is the fuel cell system according to appendices (1) to (9), further comprising: an inert gas supply passage connected to the fuel gas system, wherein the vent system includes a condensed water backflow preventing portion, and a drying control for guiding an inert gas supplied from the inert gas supply passage to the condensed water backflow preventing portion is performed in a state in which an operation of the fuel cell stack is stopped.

A fuel cell system of appendix (11) is the fuel cell system according to appendix (10), wherein in the drying control, the inert gas is supplied from the inert gas supply passage in a state in which the upstream-side block valve and the bleed valve are opened and the downstream-side block valve is closed.

A fuel cell system of appendix (12) is the fuel cell system according to appendix (10), further comprising: a purge system that branches off from the fuel gas system at a position on a downstream side of a merging portion between the fuel gas system and the inert gas supply passage and on an upstream side of the upstream-side block valve, and joins the vent system, wherein the purge system includes a purge passage and a purge valve.

A fuel cell system of appendix (13) is the fuel cell system according to appendix (12), wherein in the drying control, the inert gas is supplied from the inert gas supply passage after the purge valve is opened in a state in which all of the upstream-side block valve, the downstream-side block valve, and the bleed valve are closed.

Although the embodiments of the present invention have been described above, the scope of the present invention is not limited thereto, and can be carried out within an extended or modified range without departing from the gist of the present invention.

### INDUSTRIAL APPLICABILITY

The fuel cell system of the present invention can be used to generate electric power on a ship or on land, for example.

### REFERENCE SIGNS LIST

- 2: fuel cell module
- 2a: fuel cell stack
- 3: fuel gas system
- 21: pressure reduction portion
- 22: relief valve
- 23: discharge flow path portion
- 43: atmosphere opening port
- 44: vent system
- 45: drain portion
- 46: condensed water backflow preventing portion
- 47: purge system
- 51: upstream-side block valve
- 52: downstream-side block valve
- 53: bleed valve
- 61: first pressure sensor
- 62: second pressure sensor
- 71: inert gas supply passage
- 72: merging portion
- 100: fuel cell system
- 471: purge passage
- 472: purge valve
- 500: control device

## Claims

1. A fuel cell system comprising: a fuel cell module having a fuel cell stack; a fuel gas system that supplies a fuel gas to the fuel cell stack; an upstream-side block valve and a downstream-side block valve that open and close the fuel gas system; a vent system that is provided to branch from the fuel gas system between the upstream-side block valve and the downstream-side block valve; and a bleed valve that opens and closes the vent system, wherein when an operation of the fuel cell stack is to be stopped, pressure reduction control, in which the bleed valve is opened after the upstream-side block valve is closed, and then the downstream-side block valve is closed after a predetermined time has elapsed, is performed.

2. The fuel cell system according to claim 1, wherein, in the pressure reduction control, the bleed valve is closed before the downstream-side block valve is closed.

3. The fuel cell system according to claim 1, wherein, in the pressure reduction control, the bleed valve is closed simultaneously with closing of the downstream-side block valve.

4. The fuel cell system according to claim 1, further comprising a first pressure sensor disposed in the fuel gas system between the upstream-side block valve and the fuel cell stack, wherein the predetermined time is a time until a measurement value of the first pressure sensor becomes equal to or less than a preset setting value.

5. The fuel cell system according to claim 4, wherein the first pressure sensor is disposed between the downstream-side block valve and the fuel cell stack in the fuel gas system.

6. The fuel cell system according to claim 4, wherein the first pressure sensor is disposed between the upstream-side block valve and the downstream-side block valve in the fuel gas system.

7. The fuel cell system according to claim 1, further comprising: a pressure reduction portion disposed between the downstream-side block valve and the fuel cell stack in the fuel gas system; and a relief valve disposed in a discharge flow path portion that branches from the fuel gas system between the pressure reduction portion and the fuel cell stack, wherein the discharge flow path portion merges with the vent system on a downstream side opposite to the relief valve.

8. The fuel cell system according to claim 7, further comprising: a second pressure sensor disposed between the pressure reduction portion and the fuel cell stack in the fuel gas system, wherein, in the pressure reduction control, the upstream-side block valve is closed and the downstream-side block valve and the bleed valve are opened when a value of the second pressure sensor becomes equal to or greater than a predetermined value.

9. The fuel cell system according to claim 1, further comprising a drain portion that communicates with the vent system between the bleed valve and the atmosphere opening port.

10. The fuel cell system according to claim 1, further comprising: an inert gas supply passage connected to the fuel gas system, wherein the vent system includes a condensed water backflow preventing portion, and a drying control for guiding an inert gas supplied from the inert gas supply passage to the condensed water backflow preventing portion is performed in a state in which an operation of the fuel cell stack is stopped.

11. The fuel cell system according to claim 10, wherein in the drying control, the inert gas is supplied from the inert gas supply passage in a state in which the upstream-side block valve and the bleed valve are opened and the downstream-side block valve is closed.

12. The fuel cell system according to claim 10, further comprising: a purge system that branches off from the fuel gas system at a position on a downstream side of a merging portion between the fuel gas system and the inert gas supply passage and on an upstream side of the upstream-side block valve, and joins the vent system, wherein the purge system includes a purge passage and a purge valve.

13. The fuel cell system according to claim 12, wherein in the drying control, the inert gas is supplied from the inert gas supply passage after the purge valve is opened in a state in which all of the upstream-side block valve, the downstream-side block valve, and the bleed valve are closed.
